Europäisches Patentamt

European Patent Office

Office européen des brevets

(11) Publication number: **0 177 099**
**B1**

## (12) EUROPEAN PATENT SPECIFICATION

(45) Date of publication of patent specification: **06.07.88**

(51) Int. Cl.⁴: **C 01 B 3/22,** B 01 J 23/02

(21) Application number: **85201542.9**

(22) Date of filing: **25.09.85**

(54) **Process for the preparation of synthesis gas from methanol.**

(30) Priority: **03.10.84 NL 8403006**

(43) Date of publication of application:
**09.04.86 Bulletin 86/15**

(45) Publication of the grant of the patent:
**06.07.88 Bulletin 88/27**

(84) Designated Contracting States:
**BE DE FR GB IT NL SE**

(56) References cited:
**DE-A-2 435 238**
**GB-A-1 416 317**
**GB-A-1 458 129**
**GB-A-1 551 845**
**US-A-3 890 432**
**US-A-4 431 566**

**PATENTS ABSTRACTS OF JAPAN, vol. 9, no.
66 (C-271)1789r, 26th March 1985; & JP - A - 59
199 043 (MISUBISHI JUKOGYO K.K.) 12-11-
1984**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Kramer, Petrus Anthonius
Badhuisweg 3
NL-1031 CM Amsterdam (NL)**
Inventor: **van den Berg, Franciscus Gondulfus
Anthonius
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

## Description

The invention relates to a process for the preparation of synthesis gas from methanol at an elevated temperature in the presence of a catalyst which has been obtained by depositing an aluminium oxide a substantially nickel-free metal compound comprising an alkalimetal and subjecting the loaded aluminium oxide to a heat treatment.

Such a process is known from US—A—4,431,566; it has, however, the considerable disadvantage that the conversion of methanol is very low, compared with the use of a nickel-containing catalyst. Moreover, undesirable by-products such as dimethyl ether are formed in relatively large amounts when using such known catalysts containing 2.0 mmol of either potassium or nickel per gram of aluminium oxide which have been subjected to a heat treatment in the presence of hydrogen.

It has now been found that methanol can be converted advantageously into synthesis gas while achieving a high conversion of the methanol and a high selectivity in respect of the desired product, provided that the catalyst used contains sufficient alkali metal and has been subjected to a specific heat treatment.

The invention therefore relates to a process for the preparation of synthesis gas from methanol at an elevated temperature in the presence of a catalyst which has been obtained by depositing on aluminium oxide a substantially nickel-free metal compound comprising an alkali metal and subjecting the loaded aluminium oxide to a heat treatment, characterised in that the loaded aluminium oxide contains an alkalimetal compound in a quantity corresponding with at least 2.5 mmol of alkali metal per gram of aluminium oxide, and has been subjected to a heat treatment at a temperature from 350—800°C in the presence of nitrogen.

The preparation of the synthesis gas is preferably carried out in such a manner that during the reaction the methanol is in the vapour phase. The temperature at which the reaction is carried out preferably lies between 300 and 600°C and in particular between 350 and 550°C, while the pressure, which in this connection is of lesser importance, may vary within wide limits. The reaction can suitably be carried out at atmospheric pressure or slightly below. The methanol vapour will usually be passed over the catalyst in a simple manner known per se in which the methanol vapour space velocity may vary within wide limits, e.g. between 20—1500 l (S.T.P.) methanol per l of catalyst per hour, depending on the temperature used. Although the methanol vapour may be converted batchwise into synthesis gas by the process of the invention, preference is given to a continuous process in which catalyst bed in fixed or fluidized state can suitably be employed. If desired, a carrier gas may be used when passing the methanol vapour over the catalyst. This carrier gas should be inert under the conditions at which the methanol vapour is converted into synthesis gas. A suitable carrier gas is, for example, nitrogen or helium.

Moreover, water vapour may be passed over the catalyst together with the methanol vapour, if desired. The water vapour reacts with the carbon monoxide formed to yield hydrogen and carbon dioxide. It is thus possible, if desired, to change the hydrogen/carbon monoxide ratio in the synthesis gas formed.

The aluminium oxide, which in the catalyst acts as the carrier, may in principle be any form of aluminium oxide. Preference is given to the use of gamma-aluminium oxide with a specific surface area of at least 25 $m^2$/g and in particular at least 100 $m^2$/g.

The metal compound comprising alkali metal which is deposited on the aluminium oxide prior to the heat treatment is suitably chosen from the group consisting of alkali metal-hydroxides, -nitrates, -carbonates, -bicarbonates, -alcoholates, -carboxylic acid salts, and -dicarboxylic acid salts; a combination of two or more of said compounds may also be used. Preference is given, however, to the use of a single compound chosen from the group consisting of alkali metal-carbonates, -bicarbonates, -alcoholates, -carboxylic acid salts and dicarboxylic acid salts. Most preference is given to alkali metal carbonates.

Of the above-mentioned alkali metal compounds, potassium compounds are preferred, special preference being given to such compounds as potassium carbonate, potassium bicarbonate, potassium formate, potassium acetate and potassium oxalate. The most preferred compound is potassium carbonate.

The quantity of alkali metal compound deposited on the aluminium oxide preferably corresponds with 2.5—10 mmol alkali metal per gram of aluminium oxide; most preference is given to a quantity of 3—6 mmol per gram of aluminium oxide.

The deposition of the alkali metal compound(s) on the aluminium oxide may be effected by any method known in the art of depositing compounds on carriers. The alkali metal compound(s) can be deposited on the aluminium oxide carrier in a simple manner by impregnating the carrier with an aqueous solution of the alkali metal compound(s), followed by drying at, for example, 100—300°C.

The temperature at which the heat treatment of the aluminium oxide on which the alkali metal compound has been deposited is carried out is preferably from 375—700°C. As regards the duration of the heat treatment, the higher the chosen temperature, the shorter need the duration be. A duration of 1—50 hours will generally be sufficient.

It may be advantageous to precede the heat treatment in the presence of nitrogen by a heat treatment in an oxygen-comprising gas (e.g. air or pure oxygen), preferably within the same temperature range and in the same manner as described above for the heat treatment in nitrogen.

An advantageous operation can be achieved by introducing the aluminium oxide on which an alkali metal compound has been deposited into the reactor in which the preparation of synthesis gas from methanol is subsequently to be carried out, then subjecting it to a heat treatment by passing heated nitrogen over it, optionally preceded by a heat treatment by passing a heated oxygen-comprising gas over it, and finally passing methanol vapour over the catalyst obtained.

Although the catalyst will remain active for a long time, an unacceptable drop in activity will nevertheless be observed in the course of time. The catalyst can then be regenerated by methods known per se by burning off the material deposited on the catalyst during the conversion of methanol into synthesis gas, the burning off being carried out with the use of an oxygen-comprising gas. Subsequently, the burnt-off catalyst should be subjected to a heat treatment in nitrogen as described above before it can be used again in the process according to the invention.

The invention will now be illustrated with the aid of the following Examples.

Example 1

20 g $K_2CO_3$ was dissolved in 40 ml $H_2O$. Then 80 g gamma $Al_2O_3$ with a specific surface area of 329 $m^2/g$ was impregnated with this solution. The impregnated $Al_2O_3$ was dried by heating to 250°C and then calcined for 4 h at 500°C. The amount of potassium atoms on the aluminium oxide was 3.6 mmol/g $Al_2O_3$.

4 g of the loaded $Al_2O_3$ was introduced into a reaction tube having an inner diameter of 10 mm. Then $N_2$ was passed through the reaction tube for 2 h at a flow rate of 5 l(S.T.P.)/h, at 400°C and at atmospheric pressure. Next, $CH_3OH$ was added to the $N_2$ stream and passed over the catalyst for 16 h at a space velocity of 500 l(S.T.P.)/h. 97.3% w of the throughput of methanol was found to have been converted. The converted product had the following composition expressed as % v: $H_2$ 62.5; CO 28.0; $C_1$ 2.4; $CO_2$ 2.1; $CH_3OCH_3$ 4.9 and others 0.1.

Example 2

The experiment was carried out in a similar manner as described in Example 1, except that:

(i) the heat treatment was carried out in the presence of nitrogen at 500°C; and

(ii) methanol vapour was passed over the catalyst at a temperature of 450°C for 7 days, at a space velocity of 300 l(S.T.P.)/l/h with helium being used as carrier gas (1 l(S.T.P.)/h).

All of the methanol was converted and, in addition to synthesis gas, the product gas contained only 0.5% v of $CO_2$ and 0.1 % v of $CH_4$. After 7 days, there was still no sign of any decrease in catalyst activity.

When instead of methanol a mixture of methanol and water (volume ratio 1:1) was passed over the catalyst, this likewise resulted in complete conversion of the methanol.

## Claims

1. A process for the preparation of synthesis gas from methanol at an elevated temperature in the presence of a catalyst which has been obtained by depositing on aluminium oxide a substantially nickel-free metal compound comprising an alkali metal and subjecting the loaded aluminium oxide to a heat treatment, characterized in that the loaded aluminium oxide contains an alkali metal compound in a quantity corresponding with at least 2.5 mmol of alkali metal per gram of aluminium oxide and has been subjected to a heat treatment at a temperature from 350—800°C in the presence of nitrogen.

2. A process as claimed in claim 1, characterized in that a catalyst is used which has been obtained by heat-treating aluminium oxide on which there has been deposited a quantity of an alkali metal compound corresponding with 2.5—10 mmol alkali metal per gram of aluminium oxide.

3. A process as claimed in claim 2, characterized in that a quantity of the alkali metal compound is used corresponding with 3—6 mmol alkali metal per gram of aluminium oxide.

4. A process as claimed in any of the preceding claims, characterized in that the metal compound comprising alkali metal is chosen from the group consisting of the alkali metal-hydroxides, -nitrates, -carbonates, -bicarbonates, -alcoholates, -carboxylic acid salts and -dicarboxylic acid salts.

5. A process as claimed in claim 4, wherein potassium carbonate has been used.

## Patentansprüche

1. Ein Verfahren zur Herstellung von Synthesegas aus Methanol bei erhöhter Temperatur in Gegenwart eines Katalysators, welcher durch Niederschlagen einer im wesentlichen nickelfreien Metallverbindung, enthaltend ein Alkalimetall, auf Aluminiumoxid und durch Hitzebehandlung des beladenene Aluminiumoxids, dadurch gekennzeichnet, daß das beladene Aluminiumoxid eine Alkalimetallverbindung in einer Menge enthält, die mindestens 2,5 mMol von Alkalimetall pro Gramm Aluminiumoxide entspricht, und einer Hitzebehandlung bei einer Temperatur von 350 bis 800°C in Gegenwart von Stickstoff unterzogen wurde.

2. Ein Verfahren wie in Anspruch 1 beansprucht, dadurch gekennzeichnet, daß ein Katalysator verwendet wird, welcher durch Hitzebehandlung eines Aluminiumoxids, auf welchem eine 2,5—10 mMol Alkalimetall pro Gramm Aluminiumoxid entsprechende Menge einer Alkalimetallverbindung niedergeschlagen wurde, erhalten worden ist.

3. Ein Verfahren wie in Anspruch 2 beansprucht, dadurch gekennzeichnet, daß die Alkalimetall verbindung in einer Menge verwendet wird, welche 3—6 mMol Alkalimetall pro Gramm Aluminiumoxid entspricht.

4. Ein Verfahren wie in einem der vorstehenden Ansprüche beansprucht, dadurch gekennzeichnet, daß die das Alkalimetall enthaltende Metallverbindung ausgewählt ist aus der Gruppe bestehend aus den Alkalimetallhydroxiden, -nitraten, -carbonaten, -bicarbonaten, -alkoholaten, -carbonsäuresalzen und -dicarbonsäuresalzen.

5. Ein Verfahren wie in Anspruch 4 beansprucht, in welchem Kaliumcarbonat verwendet wurde.

## Revendications

1. Procédé de préparation de gaz de synthèse à partir de méthanol, à une température élevée, en présence d'un catalyseur ayant été obtenu par dépôt, sur de l'oxyde d'aluminium, d'un composé métallique essentiellement exempt de nickel comprenant un métal alcalin, et par traitement thermique de l'oxyde d'aluminium chargé, caractérisé en ce que l'oxyde d'aluminium chargé contient un composé de métal alcalin, en une quantité correspondant à au moins 2,5 mmoles de métal alcalin par gramme d'oxyde d'aluminium, et a été soumis à un traitement thermique à une température de 350—800°C, en présence d'azote.

2. Procédé selon la revendication 1, caractérisé en ce qu'on utilise un catalyseur qui a été obtenu par traitement thermique d'oxyde d'aluminium sur lequel a été déposée une quantité d'un composé de métal alcalin correspondant à 2,5—10 mmoles de métal alcalin par gramme d'oxyde d'aluminium.

3. Procédé selon la revendication 2, caractérisé en ce qu'on utilise une quantité de composé de métal alcalin correspondant à 3—6 mmoles de métal alcalin par gramme d'oxyde d'aluminium.

4. Procédé selon l'une quelconque des revendications précédentes, caractérisé en ce que le composé métallique comprenant un métal alcalin est choisi dans le groupe constitué par les hydroxydes, nitrates, carbonates, bicarbonates, alcoolates, sels d'acides carboxyliques et sels d'acides dicarboxyliques de métal alcalin.

5. Procédé selon la revendication 4, dans lequel on utilise du carbonate de potassium.